# EUROPEAN PATENT APPLICATION

(11) **EP 2 397 522 A1**
(43) Date of publication of application: **21.12.2011**
(21) Application number: 10741166.2
(22) Date of filing: 03.02.2010
(51) Int. Cl.: C08L 67/02, C08J 3/07, C08K 3/20, C08K 3/28, C08K 5/17

(54) **POLYESTER RESIN AQUEOUS DISPERSION AND METHOD FOR PRODUCING SAME**

(30) Priority: 10.02.2009 JP 2009028040
(71) Applicant: Unitika, Ltd., Amagasaki-shi, Hyogo 660-0824 (JP)
(72) Inventor: SUGIHARA, Takashi, Uji-shi Kyoto 611-0021 (JP)
(74) Representative: HOFFMANN EITLE
(86) International application number: PCT/JP2010/051468
(87) International publication number: WO 2010/092889

(57) **Abstract**

An aqueous polyester resin dispersion, wherein a polyester resin having an acid value of 2 to 40 mgKOH/g and containing neopentylglycol as an alcohol component in an amount of 70 mol % or more is dispersed in an aqueous medium and a volume mean diameter is 50 nm or less, and a method of producing the aqueous polyester resin dispersion, including a dispersion step of dispersing the polyester resin together with a basic compound in an aqueous medium, wherein a rotational speed of agitation in a reaction tank is 500 rpm or less in the dispersing step.

## Description

### Art Field Related

The present invention relates to an aqueous polyester resin dispersion having a very small volume mean diameter that is superior in storage stability and formation of a high-performance ultrathin film. The present invention also relates to a method of producing the aqueous polyester resin dispersion easily in an energy-saving way without use of a special machine.

### Prior Art

Polyester resins have been used as film-forming resins. In particular, because they are superior in film processability, resistance to organic solvents (solvent resistance), and weather resistance and also in adhesiveness to various substrates, such as moldings and films of PET, PBT, vinyl chloride, various metals and the like, they are used, as dissolved in an organic solvent, very widely as resins for paints, inks, adhesives, coating agents etc. for those substrates.

In the recent trend toward restriction of use of organic solvents for the reasons such as environmental protection, regulation of hazardous substance under Fire Defense Law, and improvement of working environment, there is also increasing demand for aqueous polyester resin dispersions containing a polyester resin for use in such applications, as finely dispersed in an aqueous medium, and various studies for development of such dispersions are intensively conducted.

Proposed, for example, is an aqueous polyester resin dispersion produced by dispersing a carboxyl group-containing polyester resin in an aqueous medium and neutralizing the carboxylic groups thereof with a basic compound, and it is disclosed that it is possible to form a film superior in properties such as processability, water resistance, and solvent resistance by using such an aqueous dispersion. In particular, among various polyester resins, neopentylglycol is used as an alcohol component, it is known that weather resistance of the resulting resin films are improved , and that an industrial value, for example, for use as inks and coating agents becomes high (Patent Documents 1 to 3)

[Patent Document 1] JP- 2002-173582 A
[Patent Document 2] NO 2004/037924 A
[Patent Document 3] JP 2007-031509 A

### Disclosure of Invention

### Technical Problems to be Solved

The volume mean diameter of an aqueous polyester resin dispersion is preferably adjusted, for example, to 50 nm or less, for assurance of favorable storage stability for a long period of about 6 months. However, it was difficult, with the aqueous polyester resin dispersions described in the Patent Documents above, to obtain such a very small dispersion particle diameter. In addition, the production methods described in the Patent Documents above demanded use of a large-scale apparatus allowing high-rotational-speed agitation giving high shearing force for dispersion, and the agitation at high rotational velocity in such an apparatus caused a problem of large energy consumption.

Under the circumstances above, an object of the present invention is to provide a method of producing a small-diameter aqueous polyester resin dispersion superior in storage stability and giving a high-performance ultrathin film easily in an energy-saving way without use of a special machine.

### Means to Solve the Problems

After intensive studies to solve the problems above, the inventors have achieved the present invention.

The present invention relates first to an aqueous polyester resin dispersion, wherein a polyester resin having an acid value of 2 to 40 mgKOH/g and containing neopentylglycol as an alcohol component in an amount of 70 mol % or more is dispersed in an aqueous medium and a volume mean diameter of the polyester resin is 50 nm or less.

The present invention relates secondly to a method of producing an aqueous polyester resin dispersion, comprising a dispersion step of dispersing a polyester resin having an acid value of 2 to 40 mgKOH/g and containing neopentylglycol as an alcohol component in an amount of 70 mol % or more together with a basic compound in an aqueous medium, wherein a rotational speed of agitation in a reaction tank is 500 rpm or less in the dispersion step.

### Effect of the Invention

It is possible, according to the second invention, to produce an aqueous polyester resin dispersion according to the first invention in which a polyester resin contains neopentylglycol as an alcohol component in an amount of 70 moll % or more in all alcohol components of the polyester resin and has a volume mean diameter of 50 nm or less, efficiently in an energy-saving way without use of a special machine.

### Embodiments for Carrying Out the Invention

Hereinafter, the present invention will be described in detail.

First, the components constituting the polyester resin according to the present invention will be described.

The polyester resin for use in the present Invention is a polyester resin containing neopentylglycol in an amount of 70 mol % or more, preferably 74 mol % or more, in its alcohol components. Neopentylglycol improves particularly weather resistance of resin films. A neopentylglycol content of less than 70 mol % leads to deterioration in the film properties above and may lead to increase in a volume mean diameter of the aqueous polyester resin dispersion obtained, even if the production method of the present invention is applied. It may also lead to increase in an amount of filtration residue after the dispersion step.

Although the detailed reason is not clear, a polyester resin containing much neopentylglycol has favorable adhesiveness to a polypropylene (PP) substrate, in particular a substrate film such as Cast polypropylene (CPP: non-stretched polypropylene) film.

Alcohol components for the polyester resin that can be used in addition to neopentylglycol are exemplified by polyalcohols having two or more terminal hydroxyl groups, such as aliphatic glycols, alicyclic glycols, ether bond-containing glycols and trifunctional or higher alcohols. Examples of the aliphatic glycols include ethylene glycol, 1,2-propanediol, 1,3-propanediol, 1,4-butanediol, 2-methyl-1,3-propanediol, 1,5-pentanediol, 1,6-hexanediol, 3-methyl-1,5-pentanediol, 1,9-nonanediol, 2-ethyl-2-butylpropanediol and the like; examples of the alicyclic glycols include 1,4-cyclohexanedimethanol and the like; and examples of the ether bond-containing glycols include diethylene glycol, triethylene glycol, dipropylene glycol, polytetramethylene glycol, polyethylene glycol, polypropylene glycol and the like. Examples of the trifunctional or higher alcohols include glycerol, trimethylolethane, trimethylolpropane, pentaerythritol and the like. Examples of the polyalcohols include ethylene oxide adducts of bisphenols (e.g., bisphenol A) such as 2,2-bis[4-(hydroxyethoxy)phenyl]propane; ethylene oxide adducts of bisphenols (e.g., bisphenol S) such as bis[4-(hydroxyethoxy)phenyl]sulfone; and the like. Preferable for improvement in compatibility, handling, hardness of polyester resin obtained, water resistance, and chemical resistance are ethylene glycol, 1,2-propanediol, 1,4-butanediol, 1,6-hexanediol, 1,4-cyclohexanedimethanol, diethylene glycol, polytetramethylene glycol, polyethylene glycol, trimethylolpropane, pentaerythritol, ethyleneoxide adducts of bisphenol A and the like, and particularly frequently used among them is ethylene glycol.

A content of the alcohol components other than neopentylglycol is in the range of 0 to less than 30 mol %, preferably 0 to less than 26 mol % in the alcohol components.

Examples of the acid components constituting the polyester resin include, but are not particularly limited to, aromatic dicarboxylic acids such as terephthalic acid, isophthalic acid, phthalic acid, phthalic anhydride, naphthalenedicarboxylic acid, and biphenyldicarboxylic acid; saturated fatty dicarboxylic acids such as oxalic acid, succinic acid, succinic anhydride, adipic acid, azelaic acid, sebacic acid, dodecanedicarboxylic acid eicosanedicarboxylic acid, and hydrogenated dimer acids; unsaturated fatty dicarboxylic acids such as fumaric acid, maleic acid, maleic anhydride, itaconic acid itaconic anhydride, citraconic acid, citraconic anhydride, and the dimer acids; alicyclic dicarboxylic acids such as 1,4-cyclohexanedicarboxylic acid, 1,3-cyclohexanedicarboxylic acid, 1,2-cyclohexanedicarboxylic acid, 2,5-norbornenedicarboxylic acid and the anhydride thereof, and tetrahydrophthalic acid and the anhydride thereof; and the like. In addition, trifunctional or higher carboxylic acids such as trimellitic acid, pyromellitic acid, benzophenonetetracarboxylic acid, trimellitic anhydride, pyromellitic anhydride, benzophenonetetracarboxylic anhydride, trimesic acid, ethylene glycol bis(anhydrotrirnellitate), glycerol tris(anhydrotrimellitate), and 1,2,3,4-butanetetracarboxylic acid can also be used.

The acid component is preferably an aromatic dicarboxylic acid for improvement in hardness, water resistance, solvent resistance, processability and others of the resin film formed from the aqueous dispersion. An amount of the aromatic dicarboxylic acid in all acid components is preferably 50 to 100 mol %, more preferably 70 to 100 mol %, and still more preferably 80 to 100 mol %. The aromatic carboxylic acid is preferably terephthalic acid or isophthalic acid because they are produced industrially in large quantity and inexpensive. Terephthalic acid improves strength and hardness of the polyester resin. Isophthalic acid has actions to raise affinity of the polyester resin to dispersion medium in a self-emulsificationprocess, to make it more swelling, and thus to reduce particle size of dispersed particles.

Preferably, terephthalic acid and isophthalic acid are used in combination as the aromatic dicarboxylic acid components. When used in combination, a ratio of terephthalic acid/isophthalic acid (molar ratio) is preferably in the range of 3/7 to 9/1, more preferably in the range of 4/6 to 9/1, and still more preferably in the range of 7/3 to 9/1, because the resin film formed from the aqueous dispersion has various well-balanced resin film properties such as hardness and toughness.

The polyester resin may contain, as its copolymerization constituent components, monocarboxylic acids, monoalcohols, and hydroxycarboxylic acids, and examples thereof include lauric acid, myristic acid, palmitic acid, stearic acid, oleic acid, linolic acid, linolenic acid, benzole acid, p-tert-butylbenzoic acid, cyclohexanoic acid, 4-hydroxyphenyl stearic acid, stearyl alcohol, 2-phenoxyethanol, ε-caprolactone, lactic acid, β-hydroxybutyric acid, ethyleneoxide adducts of p-hydroxybenzoic acid and the like. Trifunctional or higher polyoxycarboxylic acids may also be copolymerized, and examples thereof include malic acid, glyceric acid, citric acid, tartaric acid and the like.

Polycarboxylic acids having a hydrophilic group other than carboxyl and hydroxyl groups such as 5-sodium sulfoisophthalic acid may be used as the polyester resin component, but care should be given to its use because it may deteriorate water resistance of the resin film formed from aqueous dispersion.

An acid value of the polyester resin should be in the range of 2 to 40 mgKOH/g. An acid value of more than 40 mgKOH/g may result in insufficient properties, such as processability, of the resin film. An acid value of less than 2 mgKOH/g makes it very difficult to disperse the polyester resin in an aqueous medium described below. The acid value of the polyester resin is preferably 8 to 40 ngKOH/g, more preferably 7 to 35 mgKOH/g.

Shape of raw materials used for the polyester resin is not particularly limited, but is preferably powder, granule, or flake, when easiness of dispersion in aqueous medium is considered.

Glass transition temperature (Tg) of the polyester resin is not particularly limited. For example, polyester resins having a glass transition temperature in the range of -40 to 100°C can be used, but the temperature is preferably in the range of 30 to 100°C, more preferably 35 to 90°C, when easiness of dispersion in the aqueous medium and the shape of raw materials such as powder, granular, or flake are considered.

Number-average molecular weight of the polyester resin is preferably 5000 or more. A number-average molecular weight of less than 5000 is unfavorable, because film-forming efficiency of resin film obtained may become insufficient. The number-average molecular weight is preferably 20000 or less, to make the polyester resin have a favorable acid value.

Hereinafter, A method for producing the polyester resin for use in the present invention will be described.

The polyester resin can be produced, for example, by polycondensation between one or more polycarboxylic acids above and one or more polyalcohols above by a known method. For example, all monomer components and/or the oligomers thereof are subjected to esterification reaction under an inactive atmosphere at 180 to 260°C for 2.5 to 10 hour, and to subsequent polycondensation reaction under a reduced pressure of 130 Pa or less and a temperature of 220 to 280°C in the presence of a polycondensation catalyst until a desired molecular weight is achieved, so that polyester resin is obtained.

The polycondensation catalyst polyester is not particularly limited, and known compounds such as zinc acetate and antimony trioxide can be used.

The method of making a polyester resin have a desired acid value is, for example, a method of allowing depolymerization reaction by adding polycarboxylic acids additionally to the polymer mixture after polycondensation reaction under an inactive atmosphere.

Alternatively, a method of adding polycarboxylic anhydride, additionally after the polycondensation reaction and thus allowing addition reaction with hydroxyl groups in the polyester resin under an inactive atmosphere may be used as the method of making polyester resin have a desired acid value. But, in the case of the addition reaction, care should be given because melt viscosity of the reaction mixture may increase excessively during production, possibly prohibiting discharge of the polyester resin.

The polycarboxylic acids for use in the depolymerization reaction and/or addition reaction are preferably the trifunctional or higher carboxylic acids. Use of the trifunctional or higher carboxylic acids makes it possible by depolymerization to make the polyester resin have a desired acid value and yet retain its molecular weight. In particular, aromatic carboxylic acids such as trimellitic acid, trimellitic anhydride, pyromellitic acid, and pyromellitic anhydride are preferable.

Hereinafter, the aqueous polyester resin dispersion will be explained.

In the present invention, an aqueous polyester resin dispersion is a liquid composition containing the polyester resin dispersed in an aqueous medium. The aqueous medium is a liquid medium containing water, which may contain organic solvents and basic compounds additionally.

A content of the polyester resin in the aqueous polyester resin dispersion according to the present invention is preferably 5 to 50 mass %, more preferably 15 to 40 mass %. A polyester resin content of more than 50 mass % may lead to easier aggregation of the dispersed polyester resin and deterioration of stability of dispersion. A polyester resin content of less than 5 mass % is unpractical.

Water for use is not particularly limited, and examples thereof include distilled water, ion-exchange water, tap water, industrial water and the like, but use of distilled water or ion-exchange water is preferable.

Hereinafter, a method of producing the aqueous polyester resin dispersion will be described.

The aqueous polyester resin dispersion according to the present invention is produced through a dispersion step of dispersing the polyester resin together with a basic compound in an aqueous medium. For example, a polyester resin and a basic compound are added in lump sum to an aqueous medium, and the mixture is mixed and agitated. The polyester resin may not be dispersed easily in the aqueous medium when no basic compound is used. Alternatively, an organic solvent is preferably used additionally to facilitate conversion to aqueous dispersion. However, part or all of the organic solvent and/or the basic compound may be removed by distillation in a solvent removal step described below.

In the production method of the present invention, so-called "self-emulsification" of the polyester resin, in which dispersion thereof proceeds by hydrophilic action of carboxyl anions generated by neutralization of carboxylic acid groups with basic compounds, can be carried out easily. Therefore, the method is advantageous as an industrial production process because there is no need for employing so-called phase-inversion emulsification method in which dispersion is achieved by dissolving a polyester resin in an organic solvent in advance and mixing the solution with an aqueous medium containing a basic compound.

1 According to the production method of the present invention, it is possible to make a volume mean diameter of the polyester resin particles in the dispersion 50 nm or less by agitating the mixture in a reaction tank at a rotational speed of agitation of 500 rpm or less in the dispersion step. When the rotational speed is more than 500 rpm, excessive energy is wasted in the dispersion step. The rotational frequency is preferably lower when the energy consumption is considered, and thus, the rotational speed is preferably 400 rpm or less, more preferably 300 rpm or less. The rotational speed may be reduced to as low as approximately 30 rpm, although the possible lowest frequency depends on the composition of the polyester resin and the volume of the reaction tank.

Conversion to aqueous dispersion by phase-inversion emulsification is a liquid/liquid mixing method of a resin-containing organic solvent solution is added into an aqueous medium to be mixed and thus, a relative low-shear agitation method has been used. In contrast, in the case of the self-emulsification conversion to aqueous dispersion, which is a solid-liquid mixing method of mixing and dispersing finely a resin solid matter directly in an aqueous medium, it has been believed that high revolution and high shear are needed for pulverization of the resin solid. However, although the reasons are unknown, the high revolution and high shear used traditionally are not always needed for the conversion to aqueous dispersion with respect to specific polyester resin compositions such as those of the present invention.

The shear rate in the dispersion step is preferably 50 to 400 sec⁻¹, more preferably 100 to 300 sec⁻¹. When a shear rate is less than 50 sec⁻¹, it is difficult to prepare an aqueous polyester dispersion having a volume mean diameter of 50 nm or less and being superior in stability. A shear rate of more than 400 sec⁻¹ is unfavorable, as enormous energy is needed.
The shear rate (sec⁻¹), as used herein, is a value calculated as v/h, wherein v represents the rotational velocity v (m/sec) of the edge of agitation blade and h represents the distance (m) between the edge of agitation blade and the internal wall surface of reaction tank.

Temperature of the reaction tank in the dispersion step is not particularly limited, but for example in the range of 30 to 100°C. It is preferably determined depending on Tg of polyester resin, preferably for example in the range of Tg to (Tg+70)°C. Much energy is consumed, if the reaction tank is heated to a temperature of more than 100°C, and thus, the temperature of the reaction tank is preferably 100°C or lower. The lowest limit temperature of the reaction tank is more preferably Tg+10°C or higher, and the highest limit temperature is more preferably 80 to 100°C. For example, when Tg is 40°C, the temperature of the reaction tank is preferably 40°C to 100°C, more preferably 50 to 80°C. Alternatively, for example when Tg is 70°C, the temperature of the reaction tank is preferably 70°C to 100°C. more preferably 80°C to 100°C.

Capacity of the reaction tank used in the dispersion step is not particularly limited, but preferably 0.001 to 10 m³.

Organic solvents for use in the present inventions are, for example, known solvents including ketone-based organic solvents, aromatic hydrocarbon-based organic solvents, ether-based organic solvents, halogen-containing organic solvents, alcoholic organic solvents, ester-based organic solvents, glycol-based organic solvents and the like. Examples of the ketone-based organic solvents include methylethylketone, acetone, diethylketone, methylpropylketone, methylisobutylketor3e, 2-hexanone, 5-methyl-2-hexanone, cyclopentanone, cyclohexanone and the like; examples of the aromatic hydrocarbon-based organic solvents include toluene, xylene, benzene and the like; and examples of the ether-based organic solvents include dioxane, tetrahydrofuran and the like. Examples of the halogen-containing organic solvents include carbon tetrachloride, trichloromethane, dichloromethane and the like; examples of the alcoholic organic solvents include methanol, ethanol, n-propanol, isopropanol, n-butanol, isobutanol, sec-butanol, tert-butanol, n-amyl alcohol, isoamyl alcohol, sec-amyl alcohol, tert-amyl alcohol, 1-ethyl-1-propanol, 2-methyl-1-butanol and the like; examples of the ester-based organic solvents include ethyl acetate, n-propyl acetate, isopropyl acetate, n-butyl acetate, isobutyl acetate, sec-butyl acetate, 3-methoxybutyl acetate, methyl propionate and the like; examples of the glycol-based organic solvents include ethylene glycol, ethylene glycol monomethylether, ethylene glycol monoethylether, ethylene glycol monopropylether, ethylene glycol monobutylether, ethylene glycol ethylether acetate, diethylene glycol, diethylene glycol monomethylether, diethylene glycol monoethylether, diethylene glycol monobutylether, diethylene glycol ethylether acetate and the like. Other organic solvents such as 3-methoxy-3-methylbutanol, 3-methoxybutanol, acetonitrile, dimethylformamide, dimethylacetamide, and diacetone alcohol can also be used. The organic solvents may be used alone or in combination of two or more.

The organic solvent preferably has a solubility in water of 5 g/L or more, more preferably 10 g/L or more at 20°C. Its boiling point is preferably 150°C or lower. When the boiling point is higher than 150°C, energy in a great amount is needed for vaporization of the solvent from the resin film by drying. In particular, organic solvents having a solubility of 5 g/L or more and a boiling point of 150°C or lower are preferable, and typical organic solvents satisfying the condition above include methylethylketone, tetrahydrofuran, ethanol, n-propanol, isopropanol, n-butanol, ethylene glycol monoethylether and the like; examples thereof more favorable from the viewpoints of dispersion efficiency, dispersion stability, volatility and others include alcohols having 2 to 4 carbon atoms; more preferable are alcohols having 3 carbon atoms; and isopropanol is particularly favorable.

It is possible to prepare the aqueous polyester resin dispersion having a volume mean diameter of 50 nm or less more easily by controlling a content ratio of the organic solvent used. For example when isopropanol is used as the organic solvent, the content of isopropanol in the aqueous polyester resin dispersion is more preferably 17 to 22 mass %.

The basic compound for use in the present invention is not particularly limited, when it can neutralize carboxyl groups, and examples thereof include metal hydroxides, ammonia, organic amines and the like. Typical examples of the metal hydroxides include, LiOH, KOH, NaOH and the like. Typical examples of the organic amines include ethylamine, diethylamine, triethylamine, propylamine, isopropylamine, imino bispropylamine, 3-ethoxypropylamine, 3-diethylaminopropylamine, diethanolamine, triethanolamine, N,N-diethylethanolamine, N,N-dimethylethanolamine, aminoethanolamine, morpholine, N-methylmorpholine, N-ethylmorpholine and the like.

The basic compound, as used in the present invention, is preferably a compound having a boiling point of 150°C or lower, because it is easily vaporized from the resin film during drying; especially, use of ammonia, ethylamine, diethylamine, triethylamine or isopropylamine is preferable; and in particular, use of triethylamine is preferable, because it gives a dispersion superior in dispersion stability.

An amount of the basic compound used is, for example, 0.90 to 3.61 g, preferably about 1.80 to 2.71 g, with respect to 100 g of polyester resin having an acid value of 10 mgKOH/g, from the viewpoints of easy dispersion, dispersion stability, storage stability and others. As a rough estimate, the amount of the basic compound is preferably increased twice, when the acid value is twice higher. When the amount is excessive, it is difficultto obtain an aqueous polyester resin dispersion easily, because the viscosity of dispersion may fluctuate vigorously during dispersion. When it is too small, it is not possible to obtain a homogeneous aqueous polyester resin dispersion, because the polyester resin may not be dispersed in the aqueous medium sufficiently.

In the method of producing the aqueous polyester resin dispersion according to the present invention, the organic solvent and the basic compound may be removed by vaporization (solvent removal). The solvent removal step may be carried out by a method of evaporating the aqueous medium after the dispersion step. The vaporization may be carried out under normal pressure or under reduced pressure, and the apparatus used for vaporization is not particularly limited when it has a tank for introduction of liquid and a suitable agitation means.

In the production method of the present invention, a filtration step is preferably installed after the dispersion step for removal, for example, of foreign matters. In such a case, the dispersion is filtered, for example, through a 1000-mesh stainless steel filter (filtration accuracy: 15 µm, twill weave) under pressure (air pressure: 0.2 MPa). The filtration step may be provided immediately after the dispersion step or after the solvent removal step if the solvent removal step described above is provided.

In the production method of the present invention, efficiency of conversion to aqueous dispersion is very high in the dispersion step. Thus, an amount of polyester resin remaining unconverted in the aqueous dispersion is extremely smell. Specifically when the filtration step is provided, the amount of the filtration residue is 0.1 mass % or less of the mass of polyester resin used as raw material.

The aqueous polyester resin dispersion prepared by the production method of the present invention is obtained in a homogeneous state, in which there is visually no regions that are locally different in solid matter concentration from other regions, for example, those generated by precipitation or phase separation, in the aqueous medium, and the aqueous polyester resin dispersion have a volume mean diameter of 50 nm or less. When the volume mean diameter or the particles is 50 nm or less, the storage stability of the aqueous polyester resin dispersion increases distinctively, allowing long-term storage of the product and leaving to increase of the value for industrial application. In addition, for example, when the dispersion is used as a primer for film coating, the volume mean diameter of 50 nm or less makes it possible to form an extremely thin film (of 0.1 µm) uniformly and smoothly, and thus, the value of the dispersion for industrial application is also improved significantly. The "volume mean diameter of aqueous polyester resin dispersion" means a volume mean diameter of polyester resin particles dispersed in aqueous polyester resin dispersion.

The volume mean diameter used in the present invention is a value determined by dynamic light scattering method as principle and by using MICROTRAC UPA (model 9340-UPA) produced by Nikkiso Co., Ltd.. The volume mean diameter is not limited to the value determined by using the apparatus above as long as it is a value determined by a method by the same principle.

The aqueous polyester resin dispersion according to the present invention, which has a small volume mean diameter and is very superior in film-forming properties, can be used favorably in various application, for example as a binder for ink and paint, a primer for coating on PET, PVC or CPP films, a primer for metal-deposited films and others.

In particular, the aqueous polyester resin dispersion according to the present invention is useful as a. primer for vapor deposition of metals such as aluminum or oxides such as silicon dioxide tightly on a substrate CPP film. Conventionally, urethane, acrylic resin and other resins have been used as a primer for vapor deposition. It becomes possible, by using the aqueous polyester resin dispersion according to the present invention as the primer, to form a vapor deposition film excellent not only in strong adhesiveness between the vapor deposition layer and the substrate but also in other properties such as heat resistance and solvent resistance.

The aqueous polyester resin dispersion according to the present invention is also useful as a primer for use when a film or sheet of a polar group-containing resin, such as polyester, vinyl chloride, or polyamide, is laminated on a film or sheet of a polyolefin resin such as polypropylene or polyethylene. Such a polyolefin resin film and a polar group-containing resin film have been laminated each other by using urethane resin or polyester resin as an adhesive, but it is possible to bond the films more tightly to each other and improve heat resistance by forming a film of the aqueous polyester resin dispersion according to the present Invention on the surface of a polyolefin resin film and/or a polar group-containing resin film as a primer before use of such an above adhesive.

Examples of the film-forming methods include gravure coating, wire bar coating, immersion coating, brush coating, spray coating, curtain flow coating and the like, and it is possible to form a uniform resin film tightly on the surface of various substrates by coating the dispersion uniformly on the surface of various substrates by those methods. If necessary, after heat-setting at around room temperature, the resulting film may be subjected to drying and heat-treating. A heating apparatus used may be, for example, a common hot-air oven or an infrared heater. Heating temperature and heating period are determined properly depending on the kind of the substrate used, i.e., the material to be coated, but, the heating temperature is normally 60 to 250°C, preferably 70 to 230°C, and most preferably 80 to 200°C when the economic efficiency is considered. The heating period is normally 1 second to 30 minutes, preferably 5 seconds to 20 minutes, and most preferably 10 seconds to 10 minutes.

Thickness of the resin film formed by using the aqueous polyester resin dispersion is determined properly depending on purpose and application thereof, but normally 0.01 to 40 µm. The thickness of the resin film is more preferably 0.01 to 0.1 µm in order to make best use of the properties of the present invention.

The aqueous polyester resin dispersion may contain, where necessary, hardening agents, various additives, surfactants, compounds having protective colloid action, water, organic solvents, pigments such as titanium oxide, zinc oxide, and carbon black, dyes, other aqueous polyester resins, aqueous urethane resins, or aqueous resins such as aqueous olefin resins and aqueous acrylic resins.

### Examples

Hereinafter, the present invention will be described specifically with reference to Examples.
The methods of evaluation and measurement used therein are as follows:

### (1) Composition of polyester resin

The composition was determined by ¹H-NMR analysis (300 MHz, by using an apparatus made by Varian Inc.,). Resins that contain a constituent monomer giving no peak making identification and quantitative measurement possible on ¹H-NMR spectrum were subjected to methanolysis in a sealed tube at 230°C for 3 hours, and the resultant was used for quantitative determination by gas chromatographic analysis.

### (2) Acid value of polyester resin

0.5 g of polyester resin was weighed accurately and dissolved in 50 ml of water/dioxane = 1/9 (volume ratio), and the solution was titrated with 0.1 mole/L potassium hydroxide methanol solution by using cresol red as an indicator. The acid value used was a value of the weight of KOH (mg) needed for neutralization divided by the weight (g) of the polyester resin.

### (3) Solid matter concentration in aqueous polyester resin dispersion:

Approximately 1 g of an aqueous polyester resin dispersion was weighed (X1 g). The mass of the residual (solid matter) after drying at 150°C for 2 hours ((Y1 g) was determined. The solid matter concentration was calculated using the following Formula:

Solidmatter concentration (mass %) = (Y1/X1) × 100

### (4) Volume mean diameter of aqueous polyester resin dispersion:

An aqueous polyester resin dispersion was diluted with water to a concentration of 0.1 mass % ([(mass of dispersion × solid matter concentration of dispersion) / (mass of dispersion + mass of water) × 100] ("masts%" of mass of resin solid matter in the entire mass of the dispersion diluted with water)) and the volume mean diameter was determined by using MICROTRAC UPA (model 9340-UPA) manufactured by Nikkiso Co., Ltd..

### (5) Filtration residue after production of aqueous polyester resin dispersion

The aqueous dispersion obtained after the dispersion step was filtered through a 1000-mesh stainless steel filter (filtration accuracy: 15 µm, twill weave) under pressure (air pressure: 0.2 MPa) and the filter cake remaining on the stainless steel filter was washed thoroughly with water and dried and the mass thereof was determined (X2 g). The filtration residue was calculated using the following Formula by using the mass of the polyester resin used as the raw material (Y2 g):

Filtration residue after production of aqueous polyester resin dispersion (mass %) = (X2/Y2) × 100

### (6) Storage stability of aqueous polyester resin dispersion

30 ml of an aqueous dispersion was placed in a 50-ml glass sample bottle and stored therein at 25°C for 6 months. Change in appearance was observed visually to evaluate storage stability.
○: There was no change in appearance and there was no precipitation or sedimentation.
△: There were some sediments on the bottom.
×: There were a great amount of sediments (including precipitates) on the bottom or there was distinct change in appearance.

### (7) Thickness of polyester resin film

The thickness of a substrate is determined in advance with a thickness gage (MICROFINE, manufactured by Union Tool Co.), and a resin film was formed on the substrate with an aqueous dispersion, and a thickness of the resin film-carrying substrate was determined similarly, and the difference was used as a thickness of the resin film.

### (8) Film-forming properties of polyester resin film

An aqueous polyester resin dispersion was applied on a CPP film (manufactured by Tohcello Co., Ltd., thickness: 50 µm) by using a desktop coating apparatus (manufactured by Yasuda Seiki seisakusho Ltd., film applicator No. 542-AB, equipped with bar coater) and dried in a hot air drier set to 90°C for 1 minute, to give a resin film having an average film thickness of 0.1 µm. The resin film was observed visually, and the film-forming properties were ranked as follows, based on cracks formed and transparency of the resin film.
○: No cracks and transparent.
×: Ccracks and/or not transparent.

### (9) Uniformity of polyester resin film

A laminate CPP film prepared with a resin film in a manner similar to (8) was boiled with a Neocarmine reagent at 80 °C for 2 minutes for dyeing. The resulting film was washed with water, and uniformity of the film was evaluated visually by examining irregularity of the dyed film surface.
○: No difference in color density and uniform dyeing.
×: Some difference in color density and non-uniform dyeing.

### (10) Adhesiveness of polyester resin film

A polyester-based adhesive (produced by UNITIKA, Ltd., Elitel UE-3220) was applied on a stretched PET film (produced by UNITIKA, Ltd., thickness: 38 µm) by a method similar to (8) above, so that an adhesive layer having an average film thickness of 3 µm was formed to give a laminate PET film. The laminate PET film was superposed on the laminate CPP film formed with a resin film similarly to (8) above with their respective coated surfaces in contact with each other and pressed in a heat-pressing machine at 100°C under a seal pressure of 0.1 MPa for 30 seconds. The peeling strength of the sample was determined by using a tensile tester (Intesco Precision Universal Tester type 2020, manufactured by Intesco Co., Ltd.) under an atmosphere at 20°C, at a peeling plane angle of 90 degrees, a peeling speed of 50 mm/minute, and a peeling width of 25 mm, and the results were evaluated in the following manner:
⊙: The peeling strength was larger than 10N/25 mm.
○: The peeling strength was 7 to 10N/25 mm.
×: The peeling strength was less than 7N/25 mm.

### (11) Adhesiveness of polyester resin film to metal deposition film

Aluminum metal was vacuum-deposited under a vacuum of 0.01 Pa, so that a vapor deposition layer on the resin film of a laminate CPP film with a resin film formed similarly to (8) above was formed to a thickness of 400 to 600 Å by using a resistance-heating vacuum deposition chamber (EBS-10A, manufactured by ULVAC, Inc.) to give a deposited CPP film. Then, the adhesive tape (width: 18 mm) specified in JIS Z1522 was mounted on the metal deposition film with the terminal area left not-mounted; the mounted tape was pressed with a rubber roller for sufficiently adhesion; and then, the adhesive tape was erected vertically toward the film at the terminal and peeled off instantaneously. The adhesiveness was evaluated visually by determining whether the metal deposition film is transferred onto the peeled-off adhesive tape surface.
○: No metal deposition film transferred onto the adhesive tape surface was observed.
×: Metal deposition film transferred onto the adhesive tape surface was observed.

### (12) Measurement of glass transition temperature

Glass transition temperature was determined in the following manner: 10 mg of a polyester resin was analyzed as sample in an input-compensation DSC (differential scanning calorimetry) apparatus (manufactured by PerkinElmer Inc. Diamond DSC, detection range: -50°C to 200°C) under the condition of a heating speed of 10°C/minute. A temperature at the intersection between the straight line extended to the high temperature side from the low temperature-side base line and the tangent line drawn at the point where the slope of the curve in the stepwise change region of glass transition is highest, in the temperature-increase curve obtained, was obtained, and the obtained temperature was determined to be the glass transition temperature (Tg).

### (13) Measurement of number-average molecular weight

Number-average molecular weight was determined in the following way: A GPC analyzer (manufactured by Shimadzu Corporation, liquid-feeding unit: LC-10ADvp and ultraviolet-visible spectrophotometer: SPD-6AV, detection wavelength: 254 nm, solvent: tetrahydrofuran, polystyrene conversion) was used for measurement.

Polyester resins used in Examples and Comparative Examples were prepared, as described below:

### [Preparation of polyester resins]

### [Polyester resin P-1]

Terephthalic acid (2471 g), isophthalic acid (1059 g), and adipic acid (548 g) as acid components and ethylene glycol (776 g) and neopentylglycol (2213 g) were placed in an autoclave and the mixture was heated at 260°C for 4 hours for esterification reaction. Antimony trioxide (2.3 g) was then added as a catalyst; the temperature of the system was raised to 280°C; and the pressure of the system was reduced gradually to 13 Pa over 1 hour. The polycondensation reaction was continued under those conditions additionally for 2 hours; the system was made back to normal pressure with nitrogen gas; when the temperature of the system was reduced to 250°C, trimellitic anhydride (120 g) was added thereto; and the mixture was agitated at 250°C for 2 hours for depolymerization reaction. Then, the system was pressurized with nitrogen gas for discharge of the resin into a sheet shape; the sheet was cooled to room temperature and then pulverized in a crusher; the fraction passing through a sieve having an opening of 1 to 6 mm was collected, to give a particulate polyester resin P-1. The molar ratio of the acid and alcohol components and the acid value, glass transition temperature, and number-average molecular weight of the polyester resin P-1 obtained are summarized in Table 1. Molar ratios, acid values, glass transition temperatures, and number-average molecular weights of the following polyester resin P-2 to P-12 are also summarized therein similarly.

### [Polyester resin P-2]

Terephthalic acid (3177 g), isophthalic acid (561 g), and adipic acid (365 g) as acid components and ethylene glycol (776 g) and neopentylglycol (2213 g) were placed in an autoclave and the mixture was heated at 270°C for 4 hours for esterification reaction. A particulate polyester resin P-2 was prepared in a manner similar to Preparative Example for production of polyester resin P-1.

### [Polyester resin P-3]

Terephthalic acid (2392 g), isophthalic acid (997g), and adipic acid (526 g) as acid components and ethylene glycol (521 g) and neopentylglycol 12500 g) were placed in an autoclave and the mixture was heated at 270°C for 4 hours for esterification reaction. A particulate polyester resin P-3 was prepared in a manner similar to Preparative Example for production of polyester resin P-1.

### [Polyester resin P-4]

Terephthalic acid (3230 g), isophthalic acid (359 g), and sebacic acid (501 g) as acid components and additionally ethylene glycol (745 g) and neopentylglycol (2125 g) were placed in an autoclave and the mixture was heated at 270°C for 4 hours for esterification reaction. A particulate polyester resin P-4 was then prepared in a manner similar to the Preparative Example for production of polyester resin P-1, except that the addition amount of trimellitic anhydride was changed to 92 g.

### [Polyester resin P-5]

Terephthalic acid (2471 g), isophthalic acid (1059 g), and adipic acid (548 g) as acid components and ethylene glycol (776 g) and neopentylglycol (2213 g) were placed in an autoclave and the mixture was heated at 260°C for 4 hours for esterification reaction. A particulate polyester resin P-5 was prepared in a manner similar to Preparative Example for production of polyester resin P-1, except that the addition amount of trimellitic anhydride was changed to 148 g.

### [Polyester resin P-6]

Terephthalic acid (2471 g), isophthalic acid (1059 g), and adipic acid (548 g) as acid components and additionally ethylene glycol (776 g) and neopentylglycol (2213 g) were placed in an autoclave and the mixture was heated at 260°C for 4 hours for esterification reaction. A particulate polyester resin P-6 was then prepared in a manner similar to the Preparative Example for production of polyester resin P-1, except that the addition amount of trimellitic anhydride was changed to 67 g.

### [Polyester resin P-7]

Terephthalic acid (2471 g), isophthalic acid (1059 g), and adipic acid (548 g) as acid components and ethylene glycol (776 g) and neopentylglycol (2213 g) were placed in an autoclave and the mixture was heated at 260°C for 4 hours for esterification reaction. A particulate polyester resin P-7 was prepared in a manner similar to Preparative Example for production of polyester resin P-1, except that the addition amount of trimellitic anhydride was changed to 181 g.

### [Polyester resin P-8]

Terephthalic acid (2307 g), isophthalic acid (577 g), and adipic acid (1087 g) as acid components and ethylene glycol (770 g) and neopentylglycol (2195 g) were placed in an autoclave and the mixture was heated at 260°C for 4 hours for esterification reaction. The resin was extruded into a sheet shape, cooled to room temperature, to give a sheet-shaped polyester resin P-8, in a manner similar to Preparative Example for production of polyester resin P-1, except that the addition amount of trimellitic anhydride was changed to 119 g.

### [Polyester resin P-9]

Terephthalic acid (2284 g), isophthalic acid (1246 g), and adipic acid (548 g) as acid components and ethylene glycol (1164 g) and neopentylglycol (1562 g) were placed in an autoclave and the mixture was heated at 260°C for 4 hours for esterification reaction. A particulate polyester resin P-9 was prepared in a manner similar to Preparative Example for production of polyester resin P-1, except that trimellitic anhydride (120 g) was replaced with trimellitic anhydride (67 g) and isophthalic acid (55 g).

### [Polyester resin P-10]

Terephthalic acid (2492 g), isophthalic acid (623 g), and sebacic acid (1263 g) as acid components and ethylene glycol (1288 g) and neopentylglycol (1354 g) were placed in an autoclave and the mixture was heated at 250°C for 4 hours for esterification reaction. The resin was then extruded into a sheet shape, cooled at room temperature, to give a sheet-shaped polyester resin P-10, in a manner similar to Preparative Example for production of polyester resin P-1, except that the addition amount of trimellitic anhydride was changed to 38 g.

### [Polyester resin P-11]

Terephthalic acid (2471 g), isophthalic acid (1059 g), and adipic acid (548 g) as acid components and ethylene glycol (776 g) and neopentylglycol (2213 g) were placed in an autoclave and the mixture was heated at 260°C for 4 hours for esterification reaction. A particulate polyester resin P-11 was prepared in a manner similar to Preparative Example for production of polyester resin P-1, except that the addition amount of trimellitic anhydride was changed to 14 g.

### [Polyester resin P-12]

Terephthalic acid (24771 g), isophthalic acid (1059 g), and adipic acid (548 g) as acid components and ethylene glycol (776 g) and neopentylglycol (2213 g) were placed in an autoclave and the mixture was heated at 260°C for 4 hours for esterification reaction. A particulate polyester resin P-12 was prepared in a manner similar to Preparative Example for production of polyester resin P-1, except that the addition amount of trimellitic anhydride was changed to 214 g.

**[Table 1]**

| Polyester resin | | | P-1 | P-2 | P-3 | P-4 | P-5 | P-6 | P-7 | P-8 | P-9 | P-10 | P-11 | P-12 |
|---|---|---|---|---|---|---|---|---|---|---|---|---|---|---|
| Composition of resin | Acid Component (polar ratio) | TPA | 58.1 | 74.6 | 58.1 | 79.4 | 58.2 | 59.1 | 57.7 | 54.7 | 53.5 | 59.5 | 59.3 | 57.4 |
| | | IPA | 24.9 | 13.2 | 24.9 | 8.8 | 24.2 | 24.7 | 24.1 | 13.6 | 30.5 | 14.9 | 25.4 | 23.9 |
| | | ADA | 14.6 | 9.8 | 14.6 | | 14.5 | 14.8 | 14.5 | 29.3 | 14.6 | | 15.0 | 14.4 |
| | | SEA | | | | 9.8 | | | | | | 24.8 | | |
| | | TMA | 2.4 | 2.4 | 2.4 | 2.0 | 3.1 | 1.4 | 3.7 | 2.4 | 1.4 | 0.8 | 0.3 | 4.3 |
| | Alcohol Component (molar ratio) | EG | 25.2 | 25.2 | 10.2 | 24.7 | 25.3 | 25.0 | 24.6 | 25.4 | 47.2 | 54.2 | 25.2 | 24.8 |
| | | NPG | 74.8 | 74.8 | 89.8 | 75.3 | 74.7 | 75.0 | 75.4 | 74.6 | 52.8 | 45.8 | 74.8 | 75.2 |
| Acid value (mgKOH/g) | | | 18 | 17 | 20 | 16 | 28 | 8 | 37 | 18 | 14 | 6 | 1 | 48 |
| Glass transition point (°C) | | | 41 | 48 | 42 | 46 | 41 | 42 | 39 | 23 | 39 | 0 | 43 | 40 |
| Number average molecular weight | | | 8000 | 7000 | 7000 | 8000 | 6000 | 11000 | 5000 | 10000 | 10000 | 17000 | 22000 | 3000 |

| | | | | | | | | | | | | | | |
|---|---|---|---|---|---|---|---|---|---|---|---|---|---|---|
| TPA: terephthalic acid, IPA: isophthalic acid, ADA: adipic acid, SEA: sebacic acid, TMA: trimellitic acid EG: ethylene glycol, NPG: neopentyl glycol | | | | | | | | | | | | | | |

### [Preparation of aqueous polyester resin dispersion]

### [Example 1]

Polyester resin P-1 (300 g), isopropyl alcohol (180 g), triethylamine (10.0 g) and distilled water (510.0g) were placed in a jacketted tightly sealable glass container (internal capacity: 2 L) equipped with a stirrer (MAZELA NZ-1200, manufactured by Tokyo Rikakikai Co., Ltd.), and the mixture was agitated with an agitation blade (with three propellers) with a rotational speed kept at 300 rpm, and heated while hot water was supplied into the jacket. The distance from the rotating shaft to the edge of the agitation blade then was 3.5 cm, and the distance from the edge of the agitation blade to the internal wall of the reaction container was 1 cm. The calculated shear rate was 110 sec⁻¹

Subsequently, the dispersion process was further carried out for 1 hour with the internal temperature of the system kept to 71 to 75°C. The dispersion was then cooled to 25°C while supplying cold water to the jacket and agitating with the rotational speed reduced to 200 rpm. The aqueous dispersion obtained was filtered through a 1000-mesh stainless steel filter to give an aqueous polyester resin dispersion (990 g) having a solid matter concentration of 30.6 mass %.

### [Examples 2]

After finishing the dispersion step in a manner similar to Example 1, the aqueous dispersion obtained (900 g) was placed in a 2-1 flask and added with distilled water (300 g), and the solvents were removed by distillation under atmospheric pressure. The solvent removal step was terminated when the distillation amount reached approximately (300 g) and the mixture was cooled to 25°C. The solvent-removed aqueous dispersion was filtered through a 1000- mesh stainless steel filter, to give an aqueous polyester resin dispersion (900 g) having a solid matter concentration of 30.0 mass %.

### [Example 3]

An aqueous polyester resin dispersion having a solid matter concentration of 30.1 mass % (990 g) was obtained in a manner similar to Example 1, except that polyester resin P-2 (300 g), isopropyl alcohol 200 g), triethylamine (11.0 g), and distilled water (490.0 g) were used.

### [Example 4]

An aqueous polyester resin dispersion having a solid matter concentration of 30.3 mass % (990 g) was obtained in a manner similar to Example 1, except that the polyester resin used was changed to P-3 and triethylamine (13.0 g) and distilled water (507.0 g) were used.

### [Example 5]

An aqueous polyester resin dispersion having a solid matter concentration of 30.1 mass % (990 g) was obtained in a manner similar to Example 1, except that the polyester resin used was changed to P-4 and triethylamine (10.5 g) and distilled water (509.5 g) were used.

### [Example 6]

An aqueous polyester resin dispersion having a solid matter concentration of 30.0 mass % (990 g) was obtained in a manner similar to Example 1, except that the polyester resin used was changed to P-5 and triethylamine (18.4 g) and distilled water (501.6 g) were used.

### [Example 7]

An aqueous polyester resin dispersion having a solid matter concentration of 29.7 mass % (990 g) was obtained in a manner similar to Example 1, except that the polyester resin used was changed to P-6 and triethylamine (5.5g) and distilled water (514.6 g) were used.

### [Example 8]

An aqueous polyester resin dispersion having a solid matter concentration of 30.0 mass % (990 g) was obtained in a manner similar to Example 1, except that the polyester resin used was changed to P-7 and triethylamine (23. 9 g) and distilled water (496.1 g) were used.

### [Example 9]

An aqueous polyester resin dispersion having a solid matter concentration of 30.3 mass % (990 g) was obtained in manner similar to Example 1, except that the polyester resi used was changed to P-8 and triethylamine (11.7 g) and distille water (508.3 g) were used.

### [Example 10]

An aqueous polyester resin dispersion having a solid matter concentration of 30.2 mass % (990 g) was obtained in manner similar to Example 1, except that the stirrer used wa changed to an ultrahigh-speed stirrer (T.K. Robomix, manufactured by Tokushu Kika Kogyo Co., Ltd.).

### [Comparative Example 1]

An aqueous polyester resin dispersion having a solid matter concentration of 29.8 mass % (950 g) was obtained in manner similar to Example 1, except that the polyester resi P-9 (300 g), isopropyl alcohol (180 g), triethylamine (9.1 g) and distilled water (510.9 g) were used.

### [Comparative Example 2]

An aqueous polyester resin dispersion having a solid matter concentration of 28.9 mass % (870 g) was obtained in manner similar to Example 1, except that the polyester resi P-10 (300 g), isopropyl alcohol (180 g), triethylamine (3.9 g) and distilled water (516.1 g) were used.

### [Comparative Example 3]

Polyester resin P-1 (400 g) and methylethylketone (60 g) were placed in a jacketted glass container (internal capacity: 2L) equipped with a stirrer (MAZELA NZ-1200, manufactured by Tokyo Rikakikai Co. , Ltd.); the polyester resi was completely dissolved as hot water at 60°C was supplied t the jacket and the rotational speed of the agitation blade (agitation rod with blades) was kept to 100 rpm, to give a polyester resin solution (1000 g) having a solid matter concentration of 40 mass %. A basic compound triethylamine (15.6 g) was then added thereto, while cold water was supplie to the jacket to keep the internal temperature at 13°C, and th rotational velocity of the agitation blade was kept to 100 rpm and then, distilled water (1114.7 g) at 13°C was added theret at a rate of 100 g/min for dispersion (dispersion step). 1600 g of the aqueous dispersion obtained was then placed in 2-1 flask, and the solvent in the aqueous medium was removed by distillation under atmospheric pressure. The solvent removal step was terminated when the distillation amount reached 631 g; After cooled to room temperature; distilled water (32 g) wa added to the aqueous polyester resin dispersion to adjust a solid matter concentration to 30 mass %, while being agitated. The dispersion was then filtered through a 1000-mesh stainless steel filter, to give a resultant aqueous polyester resin dispersion (990 g) having a solid matter concentration of 30.0 mass %.

### [Comparative Example 4]

A dispersion step was carried out in a manner similar to Example 1, except that no triethylamine was added, but the polyester resin was not dispersed in the aqueous medium, not to give a homogeneous aqueous polyester resin dispersion.

### [Comparative Example 5]

A dispersion step was carried out in a manner similar to Example 1, except that polyester resin P-11 (300 g), isopropyl alcohol (180 g), triethylamine (0.81 g), and distilled water (519.2 g) were used, but the polyester resin was not dispersed in the aqueous medium not to give a homogeneous aqueous polyester resin dispersion.

### [Comparative Example 6]

An aqueous polyester resin dispersion having a solid matter concentration of 30.0 mass % (990 g) was obtained in a manner similar to Example 1, except that the polyester resin used was changed to P-12 and triethylamine (30.9 g) and distilled water (489.1 g) were used.

The properties and evaluation results of the aqueous polyester resin dispersions obtained in Examples 1 to 10 and Comparative Examples 1 to 6 and the evaluation results of the polyester resin films obtained by using the aqueous polyester resin dispersions obtained are summarized in Table 2.

**[Table 2]**

| | Polyester resin used | | Emulsion method | solvent removal step | Rotational speed of agitation blade in dispersion step (rpm) | Properties of aqueous polyester resin dispersion | | | | Film-forming properties of polyester resin | | | |
|---|---|---|---|---|---|---|---|---|---|---|---|---|---|
| | Kind | NPG component (molar ratio) | | | | Filtration residue (% by mass) | Solid matter concentration (% by mass) | volume mean diameter (nm) | Strage stability (25°C × 6 months) | Film-forming properties | Uniformity | Adhesiveness | Adhesiveness to metal deposition film |
| Example1 | P-1 | 74.8 | Self-emulsion | absent | 300 | 0.02 | 29.8 | 45 | ○ | ○ | ○ | ⊚ | ○ |
| Example2 | P-1 | 74.8 | Self-emulsion | present | 300 | 0.03 | 30.0 | 44 | ○ | ○ | ○ | ⊚ | ○ |
| Example3 | P-2 | 74.8 | Self-emulsion | absent | 300 | 0.03 | 30.1 | 40 | ○ | ○ | ○ | ⊚ | ○ |
| Example4 | P-3 | 89.8 | Self-emulsion | absent | 300 | 0.02 | 30.3 | 23 | ○ | ○ | ○ | ⊚ | ○ |
| Example5 | P-4 | 75.3 | Self-emulsion | absent | 300 | 0.05 | 30.1 | 38 | ○ | ○ | ○ | ⊚ | ○ |
| Example6 | P-5 | 74.7 | Self-emulsion | absent | 300 | 0.02 | 30.0 | 47 | ○ | ○ | ○ | ⊚ | ○ |
| Example7 | P-6 | 75.0 | Self-emulsion | absent | 300 | 0.45 | 29.7 | 41 | ○ | ○ | ○ | ⊚ | ○ |
| Example8 | P-7 | 75.4 | Self-emulsion | absent | 300 | 0.03 | 30.0 | 35 | ○ | ○ | ○ | ○ | ○ |
| Example9 | P-8 | 74.6 | Self-emulsion | absent | 300 | 0.03 | 30.3 | 45 | ○ | ○ | ○ | ○ | ○ |
| Example10 | P-1 | 74.8 | self-emulsion | absent | 7000 | 0.05 | 30.2 | 40 | ○ | ○ | ○ | ⊚ | ○ |
| Comparative Example1 | P-9 | 52.8 | Self-emulsion | absent | 300 | 1.46 | 29.8 | 110 | △ | × | × | × | × |
| Comparative Example2 | P-10 | 45.8 | Self-emulsion | absent | 300 | 3.43 | 28.9 | 355 | × | × | × | × | × |
| Comparative Example3 | P-1 | 74.8 | Phase-inversion emulsification | present | 300 | 0.40 | 30.0 | 98 | △ | ○ | × | ○ | ○ |
| Comparative Example4 | P-1 | 74.8 | Self-emulsion | absent | 300 | Uniform aqueous dispersion not obtained | | | | - | - | - | - |
| Comparative Example5 | P-11 | 74.8 | Self-emulsion | absent | 300 | Uniform aqueous dispersion not obtained. | | | | - | - | - | - |
| Comparative Example6 | P-12 | 75.2 | Self-emulsion | absent | 300 | 0.05 | 30.0 | 35 | ○ | ○ | ○ | × | × |

As Examples 1 to 10 above relates to the aqueous polyester resin dispersions according to the present invention, it was possible to obtain an aqueous polyester resin dispersion easily at high yield in an energy-saving way without use of a special apparatus in the step of dispersing the polyester resin in aqueous medium, and the aqueous dispersion obtained had a small volume mean diameter, was superior in storage stability and in forming an ultrathin film.

The polyester resin in Example 8 had a slightly higher acid value and thus, the polyester resin film obtained was slightly lower in adhesiveness, but showed favorable practical performance.

The rate of the aromatic dicarboxylic acids in the acid components constituting the polyester resin in Example 9 was less than 80 mass % and thus, the polyester resin film obtained had slightly lower adhesiveness, but showed favorable practical performance.

Similarly, it was possible in Example 10 to obtain an aqueous polyester resin dispersion superior in storage stability having a smaller volume mean diameter at high yield. Further, the resin film obtained therefrom was superior in forming an ultrathin film.

On the other hand, Comparative Examples had the following disadvantages.

In Comparative Examples 1 and 2, the rate of neopentylglycol in the alcohol components constituting the polyester resin was less than 70 mol %, and thus, there was very much filtration residue after the dispersion step and the yield of the aqueous dispersion obtained was low. In addition, the aqueous polyester resin dispersion obtained had large volume mean diameter and was inferior in storage stability. Further, the polyester resin film obtained therefrom was inferior all in film-forming properties, uniformity, and adhesiveness.

In Comparative Example 3, a dispersion method different from that of the present invention (phase-inversion emulsification method) was used, and the aqueous dispersion obtained had a larger volume mean diameter, was lower in storage stability, and gave a polyester resin film lower in uniformity.

In Comparative Example 4, no basic compound was used in production of the aqueous dispersion and thus, the polyester resin was not dispersed in the aqueous medium, not to give a homogeneous aqueous polyester resin dispersion.

In Comparative Example 5, in which the acid value of the polyester resin was less than 2 mgKOH/g, the polyester resin was not dispersed well in the aqueous medium sufficiently, prohibiting production of a homogeneous aqueous polyester resin dispersion.

In Comparative Example 6, in which the acid value of the polyester resin was larger than 40 mgKOH/g, the adhesiveness of the polyester resin film was particularly unfavorable.

## Claims

1. An aqueous polyester resin dispersion, wherein a polyester resin having an acid value of 2 to 40 mgKOH/g and containing neopentylglycol as an alcohol component in an amount of 70 mol % or more is dispersed in an aqueous medium and a volume mean diameter is 50 nm or less.

2. A production method of the aqueous polyester resin dispersion according to Claim 1, wherein the acid value of the polyester resin is 10 to 35 mgKOH/g.

3. The aqueous polyester resin dispersion according to Claim 1 or 2, wherein the aqueous polyester resin dispersion is a self-dispersible aqueous dispersion.

4. The aqueous polyester resin dispersion according to Claim 1, wherein 70 mol % or more of acid components for the polyester resin is aromatic dicarboxylic acids.

5. The aqueous polyester resin dispersion according to Claim 4, wherein the aromatic dicarboxylic acids comprise terephthalic acid and isophthalic acid and a molar ratio of terephthalic acid/isophthalic acid is 3/7 to 9/1.

6. A method of producing an aqueous polyester resin dispersion, comprising a dispersion step wherein a polyester resin having an acid value of 2 to 40 mgKOH/g and containing neopentylglycol as an alcohol components in an amount of 70 mol % or more is dispersed together with a basic compound in an aqueous medium, and wherein an agitation rotational speed in a reaction tank is 500 rpm or less in the step.

7. The method of producing an aqueous polyester resin dispersion according to Claim 6, wherein a shear rate by the agitation rotational speed in the dispersion step is adjusted to 50 to 400 sec-1.

8. The method of producing an aqueous polyester resin dispersion according to Claim 6, wherein a temperature of the reaction tank in the dispersion step is adjusted to 30 to 100°C.

9. The method of producing an aqueous polyester resin dispersion according to Claim 6, wherein a capacity of the reaction tank in the dispersion step is 0.001 to 10 m3.

10. The method of producing an aqueous polyester resin dispersion according to Claim 6, wherein the aqueous medium contains an organic solvent.

11. The method of producing an aqueous polyester resin dispersion according to Claim 10, wherein the organic solvent has a solubility in water of 5 g/L or more at 20°C and a boiling point of 150°C or lower.

12. The method of producing an aqueous polyester resin dispersion according to any one of Claims 6 to 11, wherein the basic compound is an organic amine having a boiling point of 150°C or lower and/or ammonia.

13. The method of producing an aqueous polyester resin dispersion according to any one of Claims 6 to 12, wherein a solvent removal step of removing the organic solvent and/or the basic compound is contained after the dispersion step.

14. The method of producing an aqueous polyester resin dispersion according to any one of Claims 6 to 13, wherein a filtration step is contained after the dispersion step.

15. The method of producing an aqueous polyester resin dispersion according to Claim 14, wherein an amount of the filtration residue in the filtration step is 0.1 mass % or less with respect to the mass of the raw material polyester resin.
